(19) Europäisches Patentamt
European Patent Office
Office européen des brevets

(11) **EP 0 704 795 B1**

## (12) EUROPEAN PATENT SPECIFICATION

(45) Date of publication and mention
of the grant of the patent:
**03.05.2000 Bulletin 2000/18**

(51) Int Cl.⁷: **G06F 9/44**

(21) Application number: **95306351.8**

(22) Date of filing: **11.09.1995**

(54) **A data processing system providing an encapsulation system and a method of operating such a system**

Datenverarbeitungssystem mit einem Verkapselungssystem und eine Methode zum Betreiben eines solchen Systems

Système de traitement de données avec un système d'encapsulation et un procédé d'opération de ce système

(84) Designated Contracting States:
**CH DE FR GB IT LI**

(30) Priority: **22.09.1994 GB 9419103**

(43) Date of publication of application:
**03.04.1996 Bulletin 1996/14**

(73) Proprietor: **International Business Machines Corporation**
**Armonk, N.Y. 10504 (US)**

(72) Inventor: **McDaid, Paul Frederick**
**Terenure, Dublin 6W (IE)**

(74) Representative: **Horner, David Richard**
**IBM United Kingdom Limited,**
**Intellectual Property Department,**
**Hursley Park**
**Winchester, Hampshire SO21 2JN (GB)**

(56) References cited:
**EP-A- 0 495 279**

• **IBM TECHNICAL DISCLOSURE BULLETIN, vol. 33, no. 2, 1 July 1990 page 99/100 XP 000123548 'DEVICE-INDEPENDENT SUPPORT IN COMMUNICATION ENVIRONMENTS'**

**Description**

The present invention relates to a data processing system and a method of operation of such a system, and in particular to a technique for facilitating the operation of an object oriented application program written for a specific message based environment on a data processing system having a different message based environment.

In message based systems, computer programs operate by creating and using 'objects' which interact with each other via 'messages'. An object is a software component of a message based system containing a number of 'methods' and 'data' pertaining to itself. A method is a procedure, and executing a procedure of an object is also referred to as invoking one of its methods. Objects are created from object classes, an object being said to be an instance of a class. An object class describes an object, defining the methods of the object and the type of data which may be stored in the object.

A message is a notification issued to an object informing it that some event has occurred or requesting it to take some action or both, and a message will invoke a method of an object whenever it is received by that object. Objects may issue messages to other objects, and the message based system that the objects exist in may also issue messages to its objects. Some times the term 'message stream' is used to refer to a sequence of zero, one or more messages.

The present invention particularly relates to the porting of software. Porting is the term used to describe the activity of deploying program function available in one environment in another environment. An environment, in this case, may be considered as a set of services made available to a program to facilitate its execution. In the case of message based systems, one service of the environment will provide the means by which components of the system may pass messages between one another.

One of the objectives when porting software is to reduce the amount of code which must be modified as part of the porting process. Minimising the proportion of code which is modified minimises the porting effort, subsequent code maintenance effort and the number of new errors introduced.

The present invention is concerned with addressing a problem associated with one aspect of the porting process, namely the modification of the interface between each object and its environment such that it conforms to the interface of a first (target) environment to which the object is to be ported. The problem to be solved is as follows. Objects belonging to the application program written for a second (source) environment will expect to receive messages of the type used by the second environment, but instead will receive messages of the type used by the first (target) environment. Similarly messages sent by such objects will not be in the correct format for handling by the first environment. Furthermore, certain messages may be sent by the first environment which are not expected and not properly understood by the object, and the object may send messages not supported and not properly understood by the first environment.

In prior art systems this problem was typically solved by rewriting the objects so that they can exist in the target environment. Although this may give good performance for the resulting ported application, it does increase development and ongoing maintenance effort. The changes made are application specific so that, when another application is to be ported from the same initial environment to the same target environment, its objects must also be rewritten.

European patent application EP-A-0 377 299 describes a system which enables applications to be incorporated in a specific type of environment where data files are represented as objects, even though the applications were not written for that environment. Although one aspect of this prior art's teaching involves monitoring messages sent to the application in order to identify the occurrence of a particular event, there is no discussion of the problem with which the present invention is concerned, ie. the problem of messages being sent to and from objects of the application in the wrong format for the recipient object. This problem doesn't occur in this prior art because, once an application in their system is being used, the environment only interacts with it in a very superficial way, and additionally the data files treated as objects by the specific environment in question did not exist as objects in any other environment.

EP-A-0495279 describes an object-oriented programming platform where a generic send message function is used by objects written in different programming languages to handle the exchange of messages between these objects. The generic send message function has access to the class descriptions and uses them to locate target objects and instance variables. Messages for a first language environment are mapped into a format for a second language environment by the generic send message function.

It is an object of the present invention to provide a system which alleviates the need to modify the objects of an application due to any message differences between the source environment and the target environment to which the application is being ported.

Accordingly the present invention provides a data processing system having a first message based environment and including an encapsulation system to facilitate the operation of an application written for a second message based environment, the application being arranged to create objects which interact via messages, the encapsulation system comprising: interception means for intercepting environment dependent messages sent to or from an object of the application; conversion means for receiving each intercepted message sent to the object and converting that message into an equivalent message stream of the second message based environment, and for receiving each intercepted message sent from the object and converting that message into an equivalent message stream of the first environment; and transmission means for sending the message stream to the original destination of the intercepted message; whereby the object is treated by the first environment as a standard object of that environment.

The message stream may consist of zero, one or more messages; occasionally more than one message will need to be intercepted before a message stream is produced by the conversion means.

Preferably, the encapsulation system further comprises actioning means to ensure that, after a recipient object has received and acted upon a message that has been converted by the conversion means, any actions are performed which were not performed directly by the recipient object but which are required in order for the recipient object to act as expected by the object that sent the message.

If necessary, the encapsulation system can additionally comprise: monitoring means arranged to monitor the first message based environment for any events of interest to the object of the application, but which the first message based environment would not normally issue a message as a result of; and message issuing means, responsive to the monitoring means, for issuing messages to the object to notify the object of the occurrence of such events. A similar arrangement can be used to monitor the objects of the application for any events of interest to the first message based environment or objects of the first message based environment, but which the objects of the application would not normally issue a message as a result of. Notification of such events can then be sent to the first message based environment or its objects.

In preferred embodiments the interception means of the system comprises means for sub-classing each object created by the application, so that messages sent to such objects cause a sub-class method to be invoked rather than a method of the original object which would otherwise have been invoked.

Additionally, in preferred embodiments, objects of the application will employ API functions provided by the second environment to issue messages, and the interception means further comprises: a storage means arranged to store a set of functions provided by the encapsulation system which have the same calling sequence as the API functions used to issue messages in the second environment; and means to replace the API calls sent by the object to API functions of the second environment with calls to the corresponding functions stored in the storage means.

These corresponding functions stored in the storage means can be used to implement: (a) the conversion means for converting messages included in the API call from the object into the equivalent message stream of the first environment; and (b) the transmission means by calling appropriate API functions of the first environment to issue the message to the original destination.

The present invention is applicable to any message based environments, but in preferred embodiments the message based environments are Graphical User Interface (GUI) environments, and the objects of the application program are windows. As an example the first message based environment can be provided by Microsoft Windows, and the second message based environment can be provided by IBM's OS/2 operating system.

The interception means can be arranged to intercept all messages sent to or from the object (ie. environment dependent messages and environment independent messages), and then to identify the environment dependent messages, or alternatively can be arranged to intercept only the environment dependent messages.

Viewed from a second aspect the present invention provides a method of operating an encapsulation system provided by a data processing system having a first message based environment in order to facilitate the operation of an application program written for a second message based environment, the application program being arranged to create objects which interact via messages, the method comprising the steps of: intercepting environment dependent messages sent to or from an object of the application program; receiving each intercepted message sent to the object and converting that message into an equivalent message stream of the second message based environment; receiving each intercepted message sent from the object and converting that message into an equivalent message stream of the first environment; and sending the message stream to the original destination of the intercepted message; whereby the object is treated by the first environment as a standard object of that environment.

In considering the problem addressed by the present invention it was realised that each message based system will contain a set of rules by which objects which wish to be a part of the system and be supported by the system must abide. These rules will specify a set of messages which hosted objects must support. This set of messages along with the description of each, its cause, effect and responses shall be referred to hereafter as the 'System Message Interface' (SMI) of a message based system. Different message based systems will have different SMIs.

According to the present invention, it is not necessary to modify the 'entire message set' of an object in order to move between systems with different SMI's. The entire message set of an object is the set of all messages which the object could possibly receive; it is made up of the SMI (ie those messages which must be supported in order to be hosted by the system) plus any messages defined to be private to the application of which the object is a part.

Only the SMI of the originating system and target system need be supported. This is because any message not in these SMIs must be an application message and as such its meaning (defined by the application of which the object is a part) will remain constant across systems.

The present invention provides a technique wherein the object may retain its existing SMI when ported to the first message based environment. By retaining the same SMI across environments the need for any modification to the application source code due to message differences is eliminated.

In summary the present invention provides a system and method which allows the implementation of objects to be taken from their native environment and ported to a new environment without modification to their message interface.

The present invention will be described further, by way of example only, with reference to a preferred embodiment thereof as illustrated in the accompanying drawings, in which:

Figure 1 illustrates how window objects are derived from a window Class with a specific window procedure;

Figures 2A and 2B give a visual illustration of the concept behind the encapsulation system of the preferred embodiment of the present invention;

Figure 3 gives a general illustration of the conversion processes carried out by the system of the preferred embodiment;

Figure 4 illustrates the steps taken by the encapsulation system of the preferred embodiment once a message has been intercepted;

Figure 5 illustrates the sub-classing technique such as that used by the encapsulation system of the preferred embodiment to intercept messages sent to an object;

Figures 6A to 6C illustrate how API conversion techniques are used by the encapsulation system of the preferred embodiment to intercept messages sent from an object of the application program; and

Figure 7 illustrates how objects or windows are sub-classed as they are registered, and how such objects are then created.

In the preferred embodiment of the present invention the message based environments are Graphical User Interface (GUI) environments. Such GUI systems are composed of objects called windows which interact with each other and the GUI by means of messages.

Each window belongs to a window class. This window class defines the behaviour of the window. It does this by means of a window procedure. The window procedure contains the processing to respond to the messages received by the window. Windows of the same class have, by default, the same window procedure.

A window also has instance data associated with it. A window's instance data is a distinct block of data associated with each window and differentiating it from all other windows belonging to the same class.

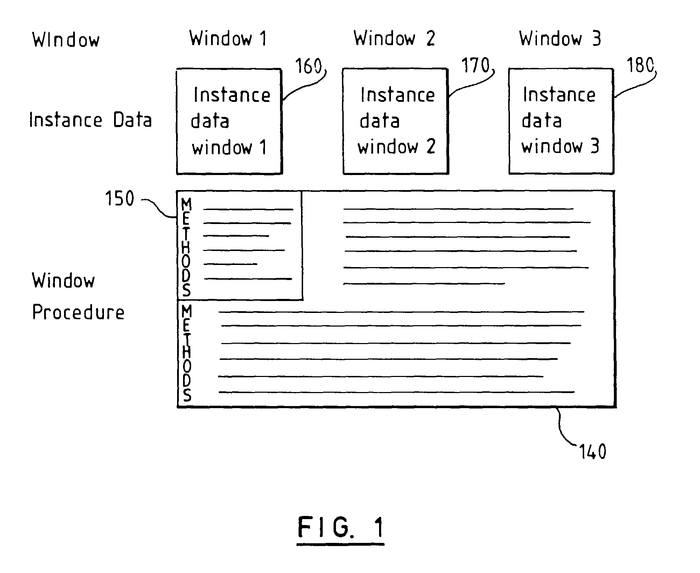

Figure 1 shows three windows with their associated instance data and window procedures. Window2 and Window3 are instances of a particular base window class. Both of these windows use the window procedure 140 of that class. All three windows (Window1, Window2, Window3) have their own instance data 160, 170, 180. As shown in Figure 1, Window1 is a sub-class of the base window class, and has a sub-class window procedure 150 in addition to the base class window procedure 140. Sub-classing will be described in detail later, it being a mechanism used in the preferred embodiment of the present invention to intercept messages sent to a window.

The GUI acts as a host for its windows. The specification of the GUI contains the rules which windows must adhere to in order to properly exist within the GUI environment, and this specification of the GUI includes the set of messages a hosted window must be capable of processing.

The model of windows in a GUI system conforms well to the model of objects in a message based system. The GUI itself corresponds to the concept of a message based system hosting objects (windows) which interact by messages. The window class corresponds to the object class, the window procedure being an aggregation of the methods of an object, whilst the instance data of the window corresponds to the object's instance data. Further, the above-mentioned set of GUI messages correspond to the SMI of the message based system.

The principle of the present invention is to encapsulate a window, or object, in the target environment in such a way that the encapsulation system exposes the object's SMI to the object whilst exposing the target system's SMI to the target system. In this way the object can operate as though it is being hosted in its own native system, whilst the target system can treat the object as any other native object of that system, ie as though it were designed to operate in the target environment.

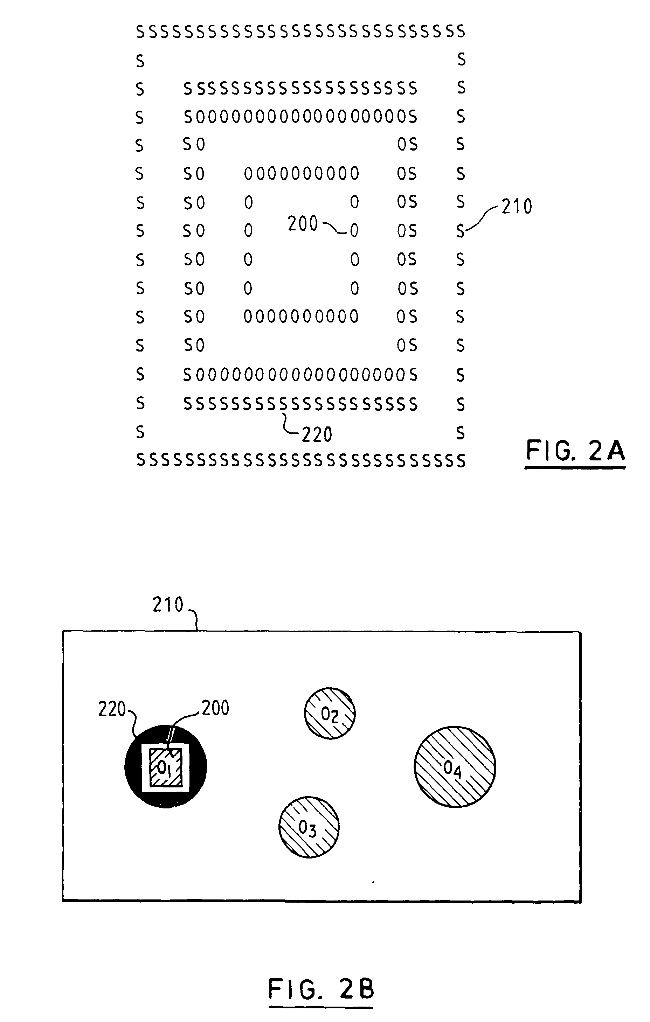

This principle is illustrated in Figure 2A, in which an object 200 is represented by a box of o's and the target system 210 containing the object 200 by a box of s's. The encapsulation system 220 used to encapsulate the object 200 is represented by a double box of o's and s's which isolate the object from the system. The o's on the inside represent the way in which the encapsulation system 220 exposes the SMI of the object's native system to the object 200. The s's on the outside represent how the encapsulation system 220 exposes the SMI of the target system 210 to that system.

Figure 2B further illustrates the encapsulation principle. In this figure an object $O_1$ 200 is hosted in a message based system 210 which supports a different SMI to that of $O_1$. This is achieved by use of the encapsulation system 220 which exposes the SMI of $O_1$ to $O_1$ whilst exposing the SMI of the system 210 to the other objects $O_2$, $O_3$, and $O_4$ of the system 210 and to the system 210 itself. In Figure 2B the encapsulation system 220 is shown as a square within a circle, the object $O_1$ is shown as a square within the encapsulation system, and the other objects are shown as circles. Using this representation, the encapsulation system 220 achieves the result that the system 210 sees all it objects as circles, whilst the object $O_1$ sees the system 210 and its objects $O_2$, $O_3$, and $O_4$ as square.

For an object with one SMI to exist in a message based system with another SMI it must behave such that it is able :-

1) to accept and respond as a native object of its host environment would to all messages of its host's SMI;

2) to have native objects and the host system accept and respond to all messages of its own SMI as it would expect were it in its own native system;

3) to receive any message of its own SMI which corresponds to any event which may occur in its new host environment; and

4) to notify its host environment and/or the host environment's objects of any event which occurred within it which they would expect to be made aware of by a native object of the host system.

The encapsulation system of the preferred embodiment of the present invention has the responsibility to ensure that the above four aspects of behaviour are provided.

There are two points of message interface between an object and its environment, namely the interface point between the object and incoming message and the interface point between the object and outgoing message. It is at these points that the encapsulation system of the preferred embodiment handles the majority of the work required to effect encapsulation as described above.

The tasks required at each point of interface are essentially the same for messages received by the object as for those issued by it, namely:

1) to convert the message (if appropriate) from the SMI of the sender to the SMI of the recipient;

2) to issue the message to the recipient;

3) to perform any other actions which the sender would expect the recipient to have taken based on the message it sent; and

4) on an ongoing basis, to monitor any activities within the sender which a recipient may be interested in.

The fact that the activities at both points of interface are the same means that we need only discuss the encapsulation mechanisms with respect to these four generic activities. The following discussion will apply equally to the processing of received messages as it will to issued messages.

Firstly we shall consider all the possible ways in which SMI messages of one message based system may be related to those of another. For each case the mechanism of conversion of messages from the SMI of one system to those of the other shall be described.

A message is received or issued to inform its recipient of the occurrence of some event or to instruct it to take some action. The requirement to act on the receipt of a message is itself an extension of the process of receiving a message; after all, to act on a message an object must first receive it. From the point of view of the encapsulation system the intention of the message, be it to inform or to instruct, is irrelevant.

Being able to ignore the intent of a message simplifies the following analysis as we can then consider the message as a means of notification of an event (all be it that the event may be the desire of one object of the system to effect some action in another).

To illustrate the processing required when converting messages from the SMI of one system to that of another, the following example will be considered. In the following description, an event will be said to correspond to a message if the message is issued to an object to notify that object of the occurrence of the event.

Consider two message based systems M and N. Let m = {m1, m2, m31, m32, m5} be the complete set of SMI messages of M, and let there be a 1:1 correspondence between the set of messages m and the set of events em= {e1, e2, e31, e32, e5} giving rise to those messages. Similarly let n={n1, n21, n22, n3, n4} be the complete sets of SMI messages for N, and let there be a 1:1 correspondence between n and the set of events en={e1, e21, e22, e3, e4} giving rise to those messages.

If e2 = e21+e22 (meaning event e2 is composed of event e21 followed by event e22) and e3 = e31+e32, then the following relationships between the sets of events and messages of both SMIs are apparent:

TABLE 1

```
        Case      Event     Msg in M              Msg in N
        ----      -----     --------              --------

         1         e1       m1  ---------------->  n1


         2         e2       m2  ------------|
                   e21                       |--->  n21
                   e22                       |--->  n22


         3         e31      m31 ------------|
                   e32      m32 ------------|
                   e3                        |--->  n3


         4         e4                                n4


         5         e5       m5
```

The above construction does not explicitly deal with the situation where an event on one system maps to many events on the other. However it does deal with the situation of one event mapping on to two. This case can be extended onto the multiple mapping case if you consider that one of the events is itself compound. For example, if e21 = e211+e212, then the relationship e2 = e21+e22 becomes e2 = e211+e212+e22.

The set of messages and events in Table 1 is the least set required to enumerate all possible message relationships between the two systems, and as such there is no loss of generality in expressing the set in this form. For each relationship it is possible to demonstrate the requirements for message conversion.

The following description of the five cases outlined above will assume that the messages in M are being converted to messages in N. Since the enumeration is symmetrical, this assumption results in no loss of generality, and a similar description would also apply if messages in N were being converted to messages of M.

Reference will be made in the following description to the process of generating a message n from a message m. This term means the construction of a message n in the SMI of system N which is semantically identical to a message m in the system M. There are two parts to this generation process. The first involves changing the actual message name from m to n. The second involves the construction of message parameters for the new message n. The information for these parameters may come from the parameters of m but may also come form any other appropriate source. As will be apparent to one skilled in the art, the actual task of modifying the parameters is dependent on the message being converted.

Case 1 - e1 is an event common to both systems M and N. In M the message m1 notifies of the occurrence of e1 whilst in N, the message n1 performs the notification.

On receipt of m1, the encapsulation system generates message n1 and issues it to the recipient in place of m1.

After issuing the message, the encapsulation system must ensure that any actions are carried out which the sender would expect the recipient to have taken on receipt of the message, but which the recipient did not perform because it is not an object of the native system of the sender. After these actions are performed control returns to the sender.

<u>Case 2</u> - The occurrence of event e2 in system M corresponds to the occurrence of two events e21 and e22 in system N. In M the message m2 notifies of event e2 whilst in N two messages n21 and n22 are required to give full notification of event e2.

On receipt of m2, the encapsulation mechanism generates messages n21 and n22 and issues them in order to the recipient in place of m2.

After issuing both messages, any actions which the sender would expect the recipient to have taken on receipt of the message, but which the recipient did not perform because it is not an object of the native system of the sender, are carried out.

<u>Case 3</u> - The occurrence of events e31 and e32 in system M corresponds to the occurrence of a single event e3 in N. In M the message m31 and m32 notify of events e31 and e32 whilst in N the single message n3 gives notification when both events e31 and e32 occur.

On receipt of m31 the encapsulation system does not issue any messages to the recipient. It merely notes the arrival of e31 and takes any action the sender would expect the recipient to take on receipt of m31. On receipt of an m32 message intended for the same recipient as a prior m31 message, a n3 message is generated and issued to the recipient.

After issuing n3, any actions which the sender would expect the recipient to have taken on receipt of the message, but which the recipient did not perform because it is not an object of the native system of the sender, are carried out.

<u>Case 4</u> - There exists an event e4 for which objects of N expect to receive a notification message n4. However event e4 never occurs in M or if it does there is no message to inform of it.

In the case where the event e4 never occurs in M, n4 need never be issued. In the case where it occurs in M but there is no notification message the encapsulation system must have in place an agent for detecting an occurrence of event e4. The agent is responsible for monitoring whatever aspect of the event e4 manifests itself in M and notifying the encapsulation system accordingly. On receipt of such notification the encapsulation system will issue message n4 to any objects that need notification of e4.

No further processing is required since system M never expects its objects to respond to e4.

Since an event is something which in some way affects the system, then it is clear that an agent can always be put in place to detect an event. Every event is either caused by or detectable by some software component of the system. If necessary this software component can itself be modified to act as agent, but generally other mechanisms can be employed to detect the event.

<u>Case 5</u> - Event e5 occurs in system M but there is no corresponding event in system N. Message m5 is used in system M as a notification of event e5.

In this case the encapsulation system need send no message on to the recipient since it expects no message. It must however effect behaviour the sender would expect as a result of issuing the message m5.

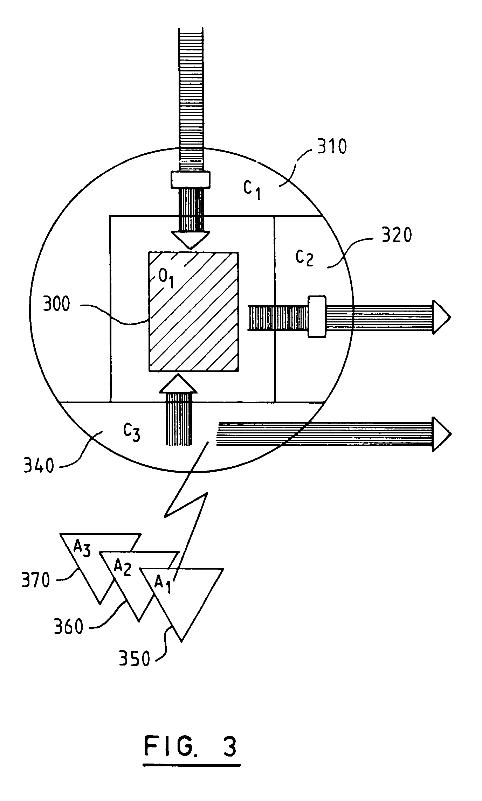

Figure 3 gives a general illustration of the conversion processes carried out by the encapsulation system of the preferred embodiment. The diagram shows an object $O_1$ 300 which is surrounded by the encapsulation system. The encapsulation system includes a mechanism $C_1$ 310, which is responsible for converting messages from the SMI of the host environment to the SMI of $O_1$ prior to them being forwarded on by the encapsulation system to object $O_1$. The figure also shows mechanism $C_2$ 320, which converts messages from the SMI of $O_1$ to the system's SMI prior to dispatching such messages from the encapsulation system. Additionally the encapsulation system includes a third mechanism $C_3$ 340 which interacts with the agents ($A_1$, $A_2$ or $A_3$) 350, 360, 370 described earlier. The agents monitor the system and the object for events which either are interested in but would not normally be informed of, because either the system or the object do not have a message corresponding to such events. The mechanism $C_3$ is responsible for issuing suitable messages to the object $O_1$ or the host system upon notification from any of the agents 350, 360 or 370 that such an event has occurred.

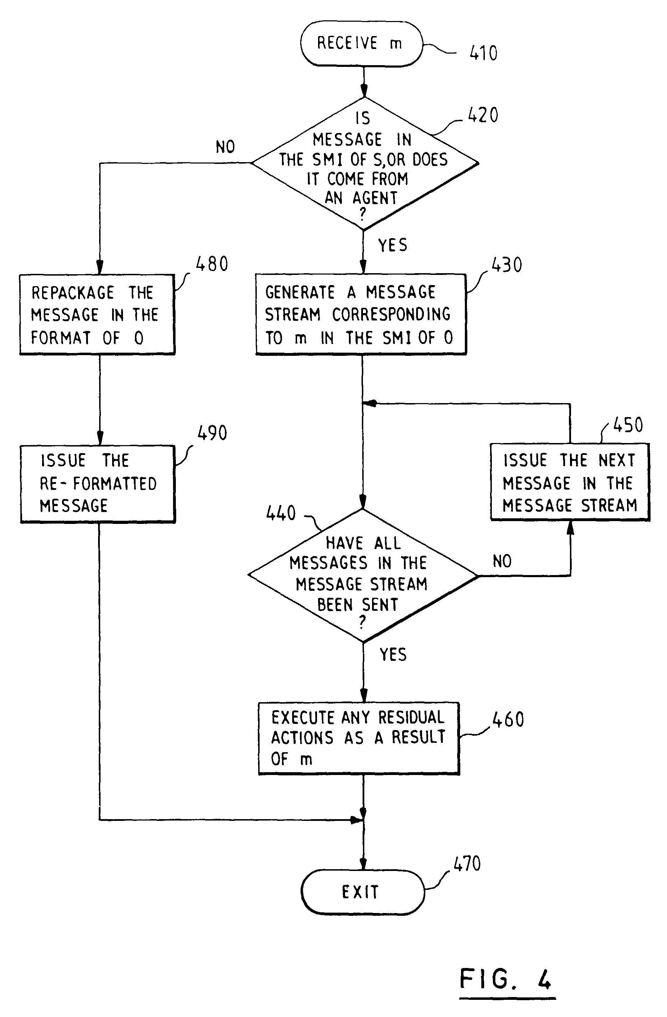

Figure 4 illustrates the steps which must be taken by the encapsulation system on receipt of a message 'm'. At step 410 a message 'm' is received by the encapsulation system. At step 420 it is determined if the message 'm' is one of the messages in the SMI of the host system, or if it has come from one of the encapsulation system's agents set up to monitor the system for certain events. If this is the case, then the process moves to step 430, where the principles described earlier are used to generate a message stream in the SMI of the encapsulated object which will notify that object of the event indicated by message 'm'.

Since the message stream may contain more than one message, then at step 440 it is determined whether all messages in the message stream have been sent. If not the process moves to step 450, where the next message in the stream is extracted and issued by the encapsulation system to the object. Once all the messages in the stream have been issued, then at step 460 any residual actions required are executed. As discussed earlier there may be actions which the sender of message 'm' expected the recipient object to take, but which that object would not take because it was not originally intended for the host environment. The encapsulation system takes these actions on behalf of the object at step 460, the particular actions, if any, required depending on the form of message 'm'. Then the process exits at step 470.

If the message 'm' received at step 410 is not from the SMI of the host system nor is it from a monitoring agent, then the message can be passed on directly to the recipient object. However, there is normally some difference in the syntax of the message parameters, and so the message may need repackaging in the format of an SMI message of the recipient object; this process is performed at step 480. At step 490 the repackaged message is issued to the recipient object, and then the process exits at step 470.

Having discussed the processes carried out by the encapsulation system upon receipt of a message, there will now follow a description of the mechanisms used by the encapsulation system of the preferred embodiment in order to intercept the messages being sent to or from the encapsulated object.

A number of techniques already exist for intercepting messages about to be received or those about to be issued by objects. In the preferred embodiment of this invention the mechanism for intercepting messages about to be received by an object involves sub-classing the object. Sub-classing is a term from the realms of Object Oriented Programming (OOP) techniques. It refers to a technique in which the methods of one object class may be used to supersede the methods of another. When an object (Object 1) is sub-classed by another object (Object 2), then the methods of Object 2 take precedence over the methods of Object 1. In effect a new object is formed including the methods of both Object 1 and Object 2. Invoking a method of the new object invokes that method in Object 2. This may result in Object 2 processing the message itself, passing the message on to Object 1 for processing, or discarding the message.

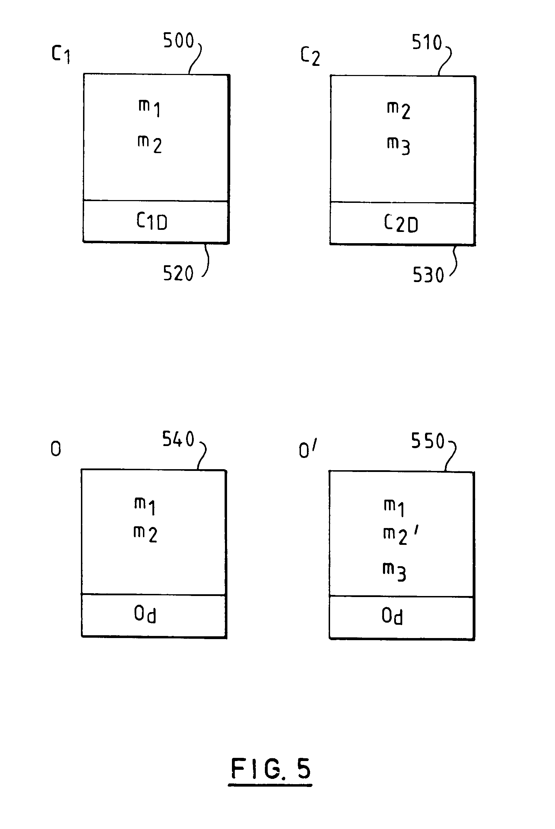

To further illustrate the principle of sub-classing, Figure 5 will now be discussed. In figure 5, C1 and C2 are two object classes. C1 consists of methods 500 {m1, m2} and a description (C1D) 520 of the data it may contain. Similarly C2 is made up of methods 510 {m2, m3} and a description (C2D) 530 of the data it may contain.

For the present example, the method m2 of C1 will be considered to be the same method as the method m2 of C2. Methods of two objects are said to be the same if they are invoked the same way in both objects, ie. by sending the same message.

Object O 540 is an instance of class C1, and can be expressed as:-

$$O = \{ m1, m2 \mid Od \}$$

where Od is the actual instance data of the object O. Od will be in the format defined by C1D.

If O is now subclassed with C2, a new object O' 550 is created whose methods are an aggregation of the methods of C1 and C2, with C2's methods taking precedence. The object O' can be expressed as:-

$$O' = \{ m1, m2', m3 \mid Od \}$$

where the term m2' indicates the combination of the m2 method of C2 with that of C1. When the method m2' of O' is invoked, the functionality of m2 of C2 is executed. This method may handle the event itself or may result in m2 of C1 being executed, or both. Hence it can be seen that in the object O', the methods of the old class, C1, are subordinate to those of the sub-class C2.

Invoking m1 on O' executes ml as defined in C1 whilst invoking m3 on O' executes m3 as defined in C2.

In order that an object may issue messages via the message based system, the environment (of which the message based system is a part) will provide functionality exposed to the object as one or more APIs. The object may call these APIs to issue messages to any other objects hosted by the system, the message being included as one of the parameters of the API call. These recipient objects may be objects of the same application, other applications or the system itself. If an object is written for a second environment then it must issue messages by making API calls to the APIs of the second environment.

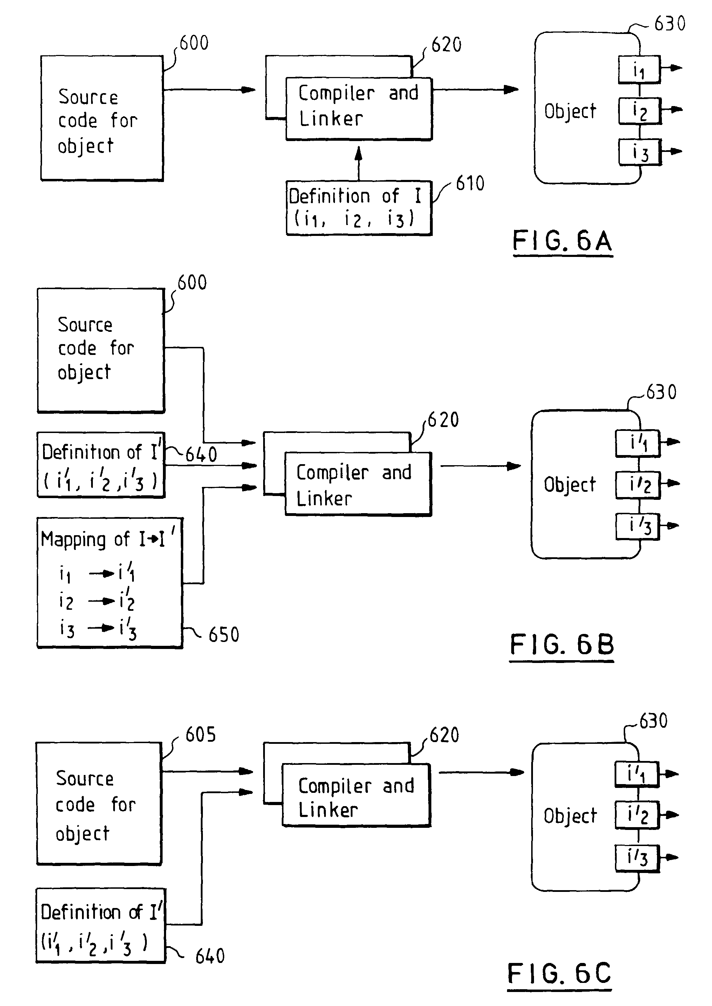

Let I be the set of all API functions of the source environment which can be used to issue messages from an object hosted in that environment. Figure 6A illustrates how the source code for an object is compiled and linked into executable code for the object when the object is to run in its source environment. The source code 600 will call API functions from the set I. The compiler and linker 620 takes the source code 600 as well as the definition of the API functions in I, and generates the executable code 630 for the object. The compiler and linker are two programs used in converting source code expressed in a programming language into an executable file which can run on a computer system. The compiler views the source code as a sequence of symbols.

When the object is ported such that the environment in which it is to run is not the source environment, then it is necessary to implement a set of functions, I', which have the same calling sequence and return as the APIs of I, differing only in the API name. It should be noted that implementation matters are simplified if the names chosen for the elements of I' are based on those in I.

Messages to be issued from an object can thus be intercepted by replacing each API call in the source code 600 of the object that refers to an API function of I with the corresponding call to a function from I'. The encapsulation system of the preferred embodiment includes the definition of I' so as to enable the object's API calls to be intercepted and converted prior to them being passed on to the environment. After the message included as part of the intercepted API call has been converted into the equivalent message stream of the target environment, the functions of I' will use the API functions of the target environment to issue messages they generate.

Many programming languages and compilers provide means by which function names may be dynamically substituted at compile time. This procedure is usually referred to as 'preprocessing' the source. It is a procedure in which a table of symbol names and equivalent names is provided to the compiler 620. When the compiler 620 then parses the source code, it replaces each symbol found in this table with its equivalent name.

If such a facility is available then it can be used to replace the occurrences of calls to the API functions of I in the object's source code with the associated calls to functions of I'. This is illustrated with reference to Figure 6B. As mentioned earlier, the source code 600 will include calls to API functions of I, these APIs not being supported by the target environment. The compiler and linker 620 takes this source code 600, a mapping table 650 of the API functions of I to the functions of I', and a definition of the functions of I' 640, and generates executable code for the object 630 which calls the functions of I' to issue messages. Within the functions of I' are included the conversion mechanisms described earlier for converting a message of the source environment into the equivalent message stream of the target environment. It is then up to the functions of I' to call the appropriate APIs of the target environment to actually issue the messages.

The above approach has the advantage that no change is required to the object's source code 600. If the compiler does not provide the facility for dynamically substituting names at compile time, then the calls to the API functions of I must be manually replaced in the source code by calls to the functions of I'. This process is illustrated in Figure 6C. The source code 600 has been modified to produce a new source file 605 in which all references to API functions of I have been replaced by the associated functions of I'. Now the compiler takes this new source file 605 as well as the definition of I' and generates executable code for the object 630 which will call the functions of I' when messages are to be issued.

Modifying the source code to replace the APIs used to issue messages for the purposes of interception of message issue does not compromise the basic purpose of the invention. The invention enables the object's SMI to be retained across environments. The APIs used to issue messages of the SMI are not part of the SMI.

Given the above description of the system of the preferred embodiment, we will now consider the specific situation in which an application originally written for the IBM OS/2 operating system (IBM and OS/2 are Trade Marks of International Business Machines Corporation) is to be ported such that it can operate under Microsoft's Windows product, hereafter referred to as MS-Windows (Windows is a Trade Mark of Microsoft Corporation).

The system of the preferred embodiment of the present invention provides a means by which the source code of an OS/2 window procedure may be used to implement the same window under MS-Windows without any modifications to it necessitated by the different SMI's supported by OS/2 and MS-Windows.

Preferably, as discussed earlier, all the OS/2 API functions called by the application to issue messages are implemented in MS-Windows. This further reduces the amount of code needing modification during porting. It means that these OS/2 API calls need no longer be replaced in the source code nor are there any consequent changes which would have been required as a result of replacing them.

Using the system of the preferred embodiment, inbound messages destined for the OS/2 window are intercepted by ensuring that each OS/2 window procedure deployed under MS-Windows is sub-classed. The sub-class procedure is responsible for converting the inbound message stream from messages of the MS-Windows SMI to messages in the OS/2 SMI. The sub-class procedure then calls the OS/2 window procedure, passing it the converted message stream. On return from processing the stream, the sub-class procedure may take any further actions (which are determined based on the particular message) to augment the actions taken by the OS/2 window procedure to make it behave as the sender of the message would expect a true MS-Windows object to behave were it to receive the same message.

In the preferred embodiment of the present invention the encapsulation sub-class window procedure used is generic. This one procedure is used to sub-class all OS/2 window procedures used in the MS-Windows environment. The following description describes how sub-classing such windows is achieved.

There are two steps in creating a window, Class Registration and Window Creation. They are common to both OS/2 and MS-Windows although they differ in the APIs used to effect them. The first step is to register the window class with the environment. This is done with the WinRegisterClass() API in OS/2 and the RegisterClass() API in MS-Windows. Registering the class tells the environment what the name of the window class is, what its window procedure is, and how much storage to reserve for instance data for each window of the class. The next step is to create the Window, and this is done under OS/2 with the WinCreateWindow() or WinCreateStdWindow() APIs and under MS-Windows with the CreateWindow() API.

The mechanism used by the system of the preferred embodiment in order to sub-class such OS/2 windows will now be discussed. Firstly all windows whose class is registered using the OS/2 API function WinRegisterClass() are automatically subclassed by the encapsulation subclass window procedure. This is effected by implementing a function called WinRegisterClass() in MS-Windows. This version of the function is responsible for calling the MS-Windows RegisterClass() API to register the window class and specifying the encapsulation sub-class window procedure as its window procedure. The actual window procedure is stored in the class's instance data so that it may be available to the encapsulation sub-class procedure.

Messages bound for the window are now received by the sub-class window procedure. It can convert them from MS-Windows to OS/2 formats in the manner described earlier in the description with reference to Table 1 and Figure 4. The resultant message stream is passed to the OS/2 window procedure by calling it directly for each message in the stream, with the converted message as a parameter. On return from processing the last message in the stream the sub-class procedure will execute any residual actions required by the message being converted.

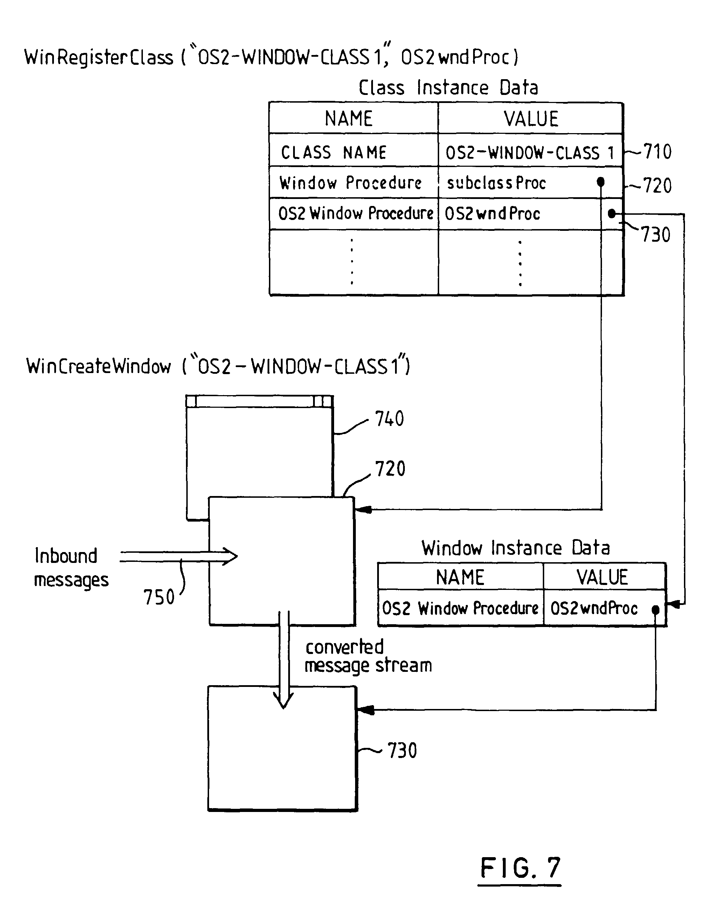

Fig 7 illustrates the above described process. As already mentioned a function called WinRegisterClass() is implemented under MS-Windows, it having the same name and calling sequence as the OS/2 API function WinRegisterClass(). It has as parameters the class name (in the Figure 7 example this is "OS2-WINDOW-CLASS1") and the OS/2 window procedure ("OS2wndProc" in this example). It registers the class with the name passed 710 but with the encapsulation system's sub-class window procedure 720 as its window procedure. It stores the actual OS/2 window procedure 730 in the class instance data for future reference.

The WinCreateWindow() function is implemented under MS-Windows to create an instance of the OS/2 window, it being passed the class name as a parameter. The window is created with a call to the MS-Windows CreateWindow() API. The resulting window 740 has the encapsulation system's sub-class procedure 720 as its window procedure. The function then queries the OS/2 window procedure 730 from the class instance data, and stores it in the window's instance data.

All inbound messages 750 to the window 740 are received first by the sub-class window procedure 720. This procedure converts such messages into an equivalent message stream in the OS/2 SMI, and then queries the OS/2 window procedure from the window instance data, calling it repeatedly for all the messages in the converted message stream.

For completeness the following pseudo code illustrates how the WinRegisterClass() and WinCreateWindow() functions are implemented under MS-Windows.

```
PROCEDURE WinRegisterClass

PARAMETERS ClassName, OS2WindowProc


RegisterClass( ClassName, encapuslationSubClassProc )
```

```
SetClassInstanceDataField( "OS2WNDPROC", OS2WindowProc )


RETURN



PROCEDURE WinCreateWindow
PARAMETERS ClassName

CreateWindow( ClassName )
OS2WindowProc = GetClassInstanceDataField( "OS2WNDPROC" )
SetWindowInstanceDataField( "OS2WNDPROC", OS2WindowProc )


RETURN



PROCEDURE encapsulationSubClassProc
PARAMETERS WindowHandle, MS-WindowsMessage

os2wndProc = GetWindowInstanceDataField( "OS2WNDPROC" )

IF ( WindowsMessage in the SMI of MS-Windows OR
     it was sent by an agent ) THEN

   os2MessageStream = ConvertToOS2( MS-WindowsMessage )

   WHILE ( os2MessageStream not all sent )
      CALL os2wndProc( WindowHandle, next message from os2 stream )
   ENDWHILE

   CALL ExecuteResidualAction( WindowHandle, MS-WindowsMessage )
ELSE
   os2Message = Reformat( WindowsMessage )
   CALL os2wndProc( WindowHandle, os2Message )
ENDIF


RETURN
```

In addition to the above, it is also possible to create Dialog Box windows under OS/2 and MS-Windows. A dialog box window is one whose class is pre-registered with the environment. The dialog box is created in a single step (as it need not be registered by the application program). The main dialog box creation APIs under OS/2 are WinDlgBox() and WinLoadDlg() whilst under windows they are DialogBoxParam() and CreateDialogParam()

The sub-classing mechanism used in the preferred embodiment to deal with Dialog boxes performs sub-classing at creation time. Functions called WinLoadDlg() and WinDlgBox() are implemented under MS-Windows. These functions call the MS-Windows APIs CreateDialogParam() and DialogBoxParam() to actually create the dialog box under MS-Windows, and the window procedure they specify for the dialog box is the encapsulation system's sub-class window procedure. They also store the real OS/2 window procedure in the dialog box's instance data, since the sub-class procedure needs to know which window procedure to pass messages on to.

Again message streams destined for the dialog box arrive at the sub-class procedure first, where the messages are converted from MS-Windows to OS/2 format before passing them on to the OS/2 window procedure.

The following pseudo code illustrates how to implement the WinDlgBox function under MS-WIndows:

```
PROCEDURE WinDlgBox

PARAMETERS os2WindowProcedure


DialogBoxParam( encapsulation sub-class window )

SetWindowInstanceDataField( "OS2WNDPROC", OS2WindowProc )


RETURN
```

A third sub-classing mechanism used by the preferred embodiment deals with a specific case where a window is created which is an instance of a native window class of MS-Windows, but then this is sub-classed with an OS/2 window procedure. Since the resultant window is viewed as an OS/2 window, the encapsulation system of the preferred embodiment is required to intercept all incoming messages which will be in MS-Windows format, and so the object is sub-classed again. The resulting chain of window procedures has the encapsulation system's sub-class window procedure receiving all incoming messages. This procedure converts the messages as it normally would and passes them to the OS/2 window procedure. The OS/2 window procedure may then need to pass the message on to the actual MS-Windows window procedure of the native window class.

Sub-classing such a window in OS/2 is effected by a call to the WinSubclassWindow() API, and this function is implemented by the encapsulation system under MS-Windows. Its responsibility is to take the OS/2 window, replace its window procedure with the encapsulation system's sub-class window procedure, store the old (original MS-Windows) window procedure, store the OS/2 window procedure and return the address of a 'thunk' procedure to its caller. The thunk procedure is called when the OS/2 procedure wishes to pass a message back to the old window procedure, this 'thunk' procedure being responsible for converting the message from its OS/2 format to MS-Windows format before passing it on to the old window procedure.

All MS-Windows format messages are now received by the sub-class procedure, and converted to OS/2 format. The resultant messages are passed on to the OS/2 window procedure or not as appropriate. If the OS/2 procedure decides to pass the message on to the old window procedure, it will call the thunk procedure. The thunk procedure converts the message from OS/2 format to MS-Windows format, and passes it on to the old window procedure. The Thunk procedure can query the old window procedure from the window's instance data. The Thunk procedure may also need to execute residual actions on the message (just as the encapsulation sub-class procedure did) to account for any differences between the action taken by the old window procedure and the action the OS/2 window procedure expected it to take.

The concept of the thunk procedure is consistent with the description of the encapsulation system of the preferred embodiment. It demands that each message entering the object be converted to an OS/2 message stream and each message leaving the object be converted to a MS-Windows message stream.

The following pseudo code illustrates how the WinSubclassWindow function and the Thunk procedure are implemented under MS-Windows:

```
PROCEDURE WinSubclassWindow
PARAMETERS WindowToSubclass, newWindowProcedure

oldWindowProcedure = GetWindowProcedure( WindowToSubclass )


SetWindowProcedure( encapsulation sub-class procedure )
SetWindowInstanceDataField( "OS2WNDPROC", newWindowProcedure )
SetWindowInstanceDataField( "OLDWNDPROC", oldWindowProcedure )


RETURN ( ThunkWindowProcedure )



PROCEDURE ThunkWindowProcedure
PARAMETERS WindowHandle, OS2Message


MS-WindowsMessageStream = ConvertToMS-Windows( OS2Message )


WHILE ( MS-WindowsMessageStream not all sent )
   CALL os2wndProc( WindowHandle,
                        next message in MS-WindowsMessageStream)
ENDWHILE


CALL ExecuteResidualAction( WindowHandle, MS-WindowsMessage )


RETURN
```

The above description illustrates three possible ways of sub-classing an OS/2 window procedure when it is incorporated in a MS-Windows environment. The following description will now discuss how API conversion is used to intercept outgoing messages sent by an OS/2 window. There are four main APIs in OS/2 which windows may use to issue messages. They are WinSendMsg(), WinPostMsg(), WinSendDlgItemMsg() and WinPostDlgItemMsg() . It is possible to intercept the messages an OS/2 window issues by implementing four functions with the same names and calling sequence (parameter list) under MS-Windows. The responsibilities of the re-written functions are to convert the OS/2 message streams passed through them to MS-Windows message streams in accordance with the preferred embodiment of the invention, to pass the converted message streams on to the target object using the appropriate MS-Windows message issuing API, and to carry out any residual actions required. The MS-Windows APIs used to issue the converted message streams are SendMessage(), and PostMessage(). SendMessage() issues messages from the WinSendMsg() and WinSendDlgItemMsg() APIs. PostMessage() issues messages from WinPostMsg() and WinPostDlgItemMsg() APIs.

When the WinSendMsg() function implemented in MS-Windows is called, it converts the message from OS/2 to MS-Windows format using the principles described earlier with reference to Table 1 and Figure 4. It passes the resultant message stream on to its intended destination window by calling the SendMessage() API for each message in the converted message stream. On return from the call to SendMessage() any residual action required by the message is executed. Control is then returned to the caller. The WinPostMsg() function is implemented in a similar fashion.

The WinSendDlgItemMsg() function is implemented by first calling GetDlgItem() to determine the destination window handle and calling WinSendMsg() passing it this window handle, the message and its parameters. WinPost-DlgItemMsg() is similarly implemented.

It will be apparent to the person skilled in the art that other message issuing APIs in OS/2 could be used, and that they can be handled in a similar manner to the four functions discussed above.

It can be seen that the processing carried out by the above four functions is the same as that carried out by the Thunk procedure described earlier, and is a mirror of the processing of the encapsulation sub-class window procedure. These functions take an OS/2 message, generate the corresponding MS-Windows message stream and then issue that stream to the destination window. They may also execute any residual actions on the message to account for any differences between the action taken by the target window and the action the OS/2 window procedure expected it to take.

The following pseudo code illustrates how the above four functions are implemented under MS-Windows, this code relating particularly to the WinSendMsg function:

```
      PROCEDURE WinSendMsg

      PARAMETERS DestinationWindow, OS2Message


      MS-WindowsMessageStream = ConvertToMS-Windows( OS2Message )


      WHILE ( MS-WindowsMessageStream not all sent )
         CALL os2wndProc( WindowHandle, next message is


                          MS-WindowsMessageStream)
      ENDWHILE


      CALL ExecuteResidualAction( WindowHandle, MS-WindowsMessage )


      RETURN
```

The system of the preferred embodiment as described above is designed to take an OS/2 window procedure and re-deploy it under Microsoft Windows without modification to its SMI, and is specifically tailored for hosting OS/2 windows under Microsoft Windows.

As will be apparent from the above description, the system of the preferred embodiment increases the amount of code which is shared between the first and second environments. By enabling more code to be re-used, productivity is increased thereby decreasing development cost. Additionally quality and maintainability is improved. The greatest potential disadvantage is the overhead on performance that can arise through use of the conversion process according to the preferred embodiment of the invention; however, in reality, this has shown to be acceptable.

**Claims**

1. A data processing system having a first message based environment and including an encapsulation system to facilitate the operation of an application written for a second message based environment, the application being arranged to create objects which interact via messages, the encapsulation system comprising:

   interception means for intercepting environment dependent messages sent to or from an object of the application;

   conversion means for receiving each intercepted message sent to the object and converting that message into an equivalent message stream of the second message based environment, and for receiving each intercepted message sent from the object and converting that message into an equivalent message stream of the first environment; and

transmission means for sending the message stream to the original destination of the intercepted message;

whereby the object is treated by the first environment as a standard object of that environment.

2. A system as claimed in Claim 1, wherein the encapsulation system further comprises:
actioning means to ensure that, after a recipient object has received and acted upon a message that has been converted by the conversion means, any actions are performed which were not performed directly by the recipient object but which are required in order for the recipient object to act as expected by the object that sent the message.

3. A system as claimed in Claim 1 or Claim 2, wherein the encapsulation system further comprises:

monitoring means arranged to monitor the first message based environment for any events of interest to the object of the application, but which the first message based environment would not normally issue a message as a result of; and

message issuing means, responsive to the monitoring means, for issuing messages to the object to notify the object of the occurrence of such events.

4. A system as claimed in any of claims 1 to 3, wherein the encapsulation system further comprises:

a second monitoring means arranged to monitor the objects of the application for any events of interest to the first message based environment or objects of the first message based environment, but which the objects of the application would not normally issue a message as a result of; and

a second message issuing means, responsive to the monitoring means, for issuing messages to the first message based environment or its objects to provide notification of the occurrence of such events.

5. A system as claimed in any preceding claim, wherein the interception means comprises:
means for sub-classing each object created by the application, so that messages sent to such objects cause a sub-class method to be invoked rather than a method of the original object which would otherwise have been invoked.

6. A system as claimed in Claim 5, wherein objects of the application employ API functions provided by the second environment to issue messages, and the interception means further comprises:

a storage means arranged to store a set of functions provided by the encapsulation system which have the same calling sequence as the API functions used to issue messages in the second environment; and

means to replace the API calls sent by the object to API functions of the second environment with calls to the corresponding functions stored in the storage means.

7. A system as claimed in Claim 6 wherein the corresponding functions stored in the storage means implement: (a) the conversion means for converting messages included in the API call from the object into the equivalent message stream of the first environment; and (b) the transmission means by calling appropriate API functions of the first environment to issue the message to the original destination.

8. A system as claimed in any preceding claim, wherein the message based environments are Graphical User Interface (GUI) environments, and the objects of the application program are windows.

9. A system as claimed in a Claim 8, wherein the first message based environment is provided by Microsoft Windows, and the second message based environment is provided by IBM's OS/2 operating system.

10. A system as claimed in any preceding claim, wherein environment independent messages are not intercepted by the interception means.

**11.** A method of operating an encapsulation system provided by a data processing system having a first message based environment in order to facilitate the operation of an application program written for a second message based environment, the application program being arranged to create objects which interact via messages, the method comprising the steps of:

intercepting environment dependent messages sent to or from an object of the application program;

receiving each intercepted message sent to the object and converting that message into an equivalent message stream of the second message based environment;

receiving each intercepted message sent from the object and converting that message into an equivalent message stream of the first environment; and

sending the message stream to the original destination of the intercepted message;

whereby the object is treated by the first environment as a standard object of that environment.

**12.** A method as claimed in Claim 11, further comprising the step of providing a process to ensure that, after a recipient object has received and acted upon a message that has been converted by the encapsulation system, any actions are performed which were not performed directly by the recipient object but which are required in order for the recipient object to act as expected by the object that sent the message.

**13.** A method as claimed in Claim 11 or Claim 12, further comprising the steps of:

monitoring the first message based environment for any events of interest to the object of the application, but which the first message based environment would not normally issue a message as a result of; and

in response to the monitoring step, issuing messages to the object to notify the object of the occurrence of such events.

**14.** A method as claimed in any of claims 11 to 13, further comprising the steps of:

monitoring the objects of the application for any events of interest to the first message based environment or objects of the first message based environment, but which the objects of the application would not normally issue a message as a result of; and

responsive to the monitoring step, issuing messages to the first message based environment or its objects to provide notification of the occurrence of such events.

**15.** A method as claimed in any of claims 11 to 14, wherein the intercepting step comprises the step of:
sub-classing each object created by the application, so that messages sent to such objects cause a subclass method to be invoked rather than a method of the original object which would otherwise have been invoked.

**16.** A method as claimed in Claim 15, wherein objects of the application employ API functions provided by the second environment to issue messages, and the interception step further comprises:

storing in a storage means a set of functions provided by the encapsulation system which have the same calling sequence as the API functions used to issue messages in the second environment; and

replacing the API calls sent by the object to API functions of the second environment with calls to the corresponding functions stored in the storage means.

**17.** A method as claimed in Claim 16 wherein the corresponding functions stored in the storage means carry out the steps of:

converting messages included in the API call from the object into the equivalent message stream of the first environment; and

sending the message stream to the original destination of the intercepted message by calling appropriate API functions of the first environment to issue the message to the original destination.

**Patentansprüche**

1. Ein Datenverarbeitungssystem mit einer ersten meldungsgestützten Umgebung und mit einem Verkapselungssystem, das den Betrieb einer Anwendung vereinfacht, die für eine zweite meldungsgestützte Umgebung geschrieben wurde, wobei die Anwendung so aufgebaut ist, daß Objekte erstellt werden, die über Meldungen miteinander kommunizieren, wobei das Verkapselungssystem folgendes umfaßt:

   Abfangmittel für das Abfangen umgebungsabhängiger Meldungen, die zu oder von einem Objekt der Anwendung gesendet wurden;

   Umwandlungsmittel für den Empfang jeder abgefangenen Meldung, die an das Objekt gesendet wurde, und für die Umwandlung dieser Meldung in einen entsprechenden Meldungsstrom der zweiten meldungsgestützten Umgebung sowie für den Empfang jeder abgefangenen Meldung, die vom Objekt gesendet wurde, und die Umwandlung dieser Meldung in einen entsprechenden Meldungsstrom der ersten Umgebung; und

   Übertragungsmittel für das Senden des Meldungsstroms an das ursprüngliche Ziel der abgefangenen Meldung;

   wobei das Objekt von der ersten Umgebung als Standardobjekt dieser Umgebung behandelt wird.

2. Ein System gemäß Anspruch 1, wobei das Verkapselungssystem weiterhin folgendes umfaßt:
   ein Betätigungsmittel, welches gewährleistet, daß, nachdem ein empfangendes Objekt eine Meldung, die vom Umwandlungsmittel umgewandelt wurde, empfangen und verarbeitet hat, alle Funktionen ausgeführt werden, die nicht direkt vom empfangenden Objekt ausgeführt wurden, die aber ausgeführt werden müssen, damit das empfangende Objekt sich gemäß den Erwartungen des sendenden Objekts verhält.

3. Ein System gemäß Anspruch 1 oder 2, wobei das Verkapselungssystem weiterhin folgendes umfaßt:

   ein Überwachungsmittel, das so eingerichtet ist, daß die erste meldungsgestützte Umgebung auf Ereignisse überwacht wird, die für das Objekt der Anwendung von Interesse sind, aber infolge derer die erste meldungsgestützte Umgebung normalerweise keine Meldung abgeben würde; und

   ein meldungserzeugendes Mittel, das mit dem Überwachungsmittel zusammenarbeitet und an das Objekt Meldungen abgibt, um das Objekt über das Eintreten solcher Ereignisse zu informieren.

4. Ein System gemäß den Ansprüchen 1 bis 3, wobei das Verkapselungssystem weiterhin folgendes umfaßt:

   ein zweites Überwachungsmittel, das so eingerichtet ist, daß die Objekte der Anwendung auf Ereignisse überwacht werden, die für die erste meldungsgestützte Umgebung von Interesse sind, aber an die die Objekte der Anwendung normalerweise keine Meldung abgeben würden; und

   ein zweites meldungserzeugendes Mittel, das mit dem Überwachungsmittel zusammenarbeitet, das Meldungen an die erste meldungsabhängige Umgebung oder ihre Objekte abgibt, um über das Eintreten solcher Ereignisse zu informieren.

5. Ein System gemäß allen vorherigen Ansprüchen, wobei das Abfangmittel folgendes umfaßt:
   ein Mittel für die Subklasseneinteilung jedes Objekts, das von der Anwendung erstellt wurde, so daß Meldungen, die an solche Objekte gesendet wurden, bewirken, daß ein Subklassenverfahren aufgerufen wird und nicht ein Verfahren des ursprünglichen Objekts, das andernfalls aufgerufen worden wäre.

6. Ein System gemäß Anspruch 5, bei dem die Objekte der Anwendung API-Funktionen verwenden, die von der zweiten Umgebung bereitgestellt werden, um Meldungen abzugeben, und bei dem das Abfangmittel weiterhin folgendes umfaßt:

ein Speichermittel, das so angeordnet ist, daß die vom Verkapselungssystem bereitgestellten Funktionen gespeichert werden können, die dieselbe Rufsequenz aufweisen wie die API-Funktionen, die zur Ausgabe von Meldungen in der zweiten Umgebung verwendet werden; und

ein Mittel, um die vom Objekt an die API-Funktionen der zweiten Umgebung gesendeten API-Rufe durch Rufe an die entsprechenden im Speichermittel gespeicherten Funktionen zu ersetzen.

**7.** Ein System gemäß Anspruch 6, bei dem die entsprechenden im Speichermittel gespeicherten Funktionen folgendes implementieren: (a) das Umwandlungsmittel für die Umwandlung von Meldungen im API-Ruf vom Objekt in den entsprechenden Meldungsstrom der ersten Umgebung; und (b) das Übertragungsmittel durch Aufruf der entsprechenden API-Funktionen der ersten Umgebung, um die Meldung an das ursprüngliche Ziel abzugeben.

**8.** Ein System gemäß allen vorherigen Ansprüchen, wobei die meldungsgestützten Umgebungen grafische Benutzerschnittstellen (GUI) und die Objekte des Anwendungsprogramms Fenster sind.

**9.** Ein System gemäß Anspruch 8, wobei die erste meldungsgestützte Umgebung von Microsoft Windows und die zweite meldungsgestützte Umgebung vom Betriebssystem IBM OS/2 bereitgestellt wird.

**10.** Ein System gemäß allen vorherigen Ansprüchen, wobei die umgebungsunabhängigen Meldungen nicht vom Abfangmittel abgefangen werden.

**11.** Ein Verfahren für den Betrieb eines Verkapselungssystems, das von einem Datenverarbeitungssystem mit einer ersten meldungsgestützten Umgebung bereitgestellt wird, um den Betrieb eines Anwendungsprogramms zu vereinfachen, das für eine zweite meldungsgestützte Umgebung geschrieben wurde, wobei das Anwendungsprogramm so angeordnet ist, daß Objekte erstellt werden, die über Meldungen miteinander kommunizieren, wobei das Verfahren die folgenden Schritte umfaßt:

Abfangen umgebungsabhängiger Meldungen, die zu oder von einem Objekt des Anwendungsprogramms gesendet wurden;

Empfang jeder abgefangenen Meldung, die an das Objekt gesendet wird, und Umwandlung dieser Meldung in einen entsprechenden Meldungsstrom der zweiten meldungsgestützten Umgebung;

Empfang jeder abgefangenen Meldung, die vom Objekt gesendet wurde, und Umwandlung dieser Meldung in einen entsprechenden Meldungsstrom der ersten meldungsgestützten Umgebung; und

Senden des Meldungsstroms an das ursprüngliche Ziel der abgefangenen Meldung;

wobei das Objekt von der ersten Umgebung als Standardobjekt dieser Umgebung behandelt wird.

**12.** Ein Verfahren gemäß Anspruch 11, das weiterhin den Schritt der Bereitstellung eines Prozesses umfaßt, der gewährleistet, daß, nachdem ein Empfangsobjekt eine Meldung, die vom Verkapselungssystem umgewandelt wurde, empfangen und verarbeitet hat, alle Funktionen ausgeführt werden, die nicht direkt vom empfangenden Objekt ausgeführt wurden, jedoch erforderlich sind, damit das empfangende Objekt sich so verhalten kann, wie es das Objekt, das die Meldung gesendet hat, erwartet.

**13.** Ein System gemäß Anspruch 11 oder 12, das weiterhin folgende Schritte umfaßt:

Überwachen der ersten meldungsgestützten Umgebung auf Ereignisse, die für das Objekt der Anwendung von Interesse sind, aber infolge derer die erste meldungsgestützte Umgebung normalerweise keine Meldung abgeben würde; und

Bereitstellen eines meldungserzeugenden Mittels, das mit dem Überwachungsmittel zusammenarbeitet und an das Objekt Meldungen abgibt, um das Objekt über das Eintreten solcher Ereignisse zu informieren.

**14.** Ein Verfahren gemäß den Ansprüchen 11 bis 13, das weiterhin die folgenden Schritte umfaßt:

Überwachen der Objekte der Anwendung auf Ereignisse, die für die erste meldungsgestützte Umgebung oder Objekte der ersten meldungsgestützten Umgebung von Interesse sind, aber infolge derer die Objekte der Anwendung normalerweise keine Meldung abgeben würden; und

In Verbindung mit dem Überwachungsschritt die Abgabe von Meldungen an die erste meldungsgestützte Umgebung oder ihre Objekte, die eine Benachrichtigung über das Eintreten solcher Ereignisse umfaßt.

**15.** Ein Verfahren gemäß den Ansprüchen 11 bis 14, wobei der Abfangschritt den folgenden Schritt umfaßt: Subklasseneinteilung jedes Objekts, das von der Anwendung erstellt wurde, so daß Meldungen, die an solche Objekte gesendet wurden, bewirken, daß ein Subklassenverfahren aufgerufen wird und nicht ein Verfahren des ursprünglichen Objekts, das andernfalls aufgerufen worden wäre.

**16.** Ein Verfahren gemäß Anspruch 15, bei dem die Objekte der Anwendung API-Funktionen verwenden, die von der zweiten Umgebung bereitgestellt werden, um Meldungen abzugeben, und bei dem das Abfangmittel weiterhin folgendes umfaßt:

ein Speichermittel, das so angeordnet ist, daß die vom Verkapselungssystem bereitgestellten Funktionen gespeichert werden können, die dieselbe Rufsequenz aufweisen wie die API-Funktionen, die zur Ausgabe von Meldungen in der zweiten Umgebung verwendet werden; und

ein Mittel, um die vom Objekt an die API-Funktionen der zweiten Umgebung gesendeten API-Rufe durch Rufe an die entsprechenden im Speichermittel gespeicherten Funktionen zu ersetzen.

**17.** Ein Verfahren gemäß Anspruch 16, bei dem die entsprechenden Funktionen, die im Speichermittel gespeichert sind, folgende Schritte ausführen:

Umwandeln von Meldungen, die im API-Ruf enthalten sind, vom Objekt in den entsprechenden Meldungsstrom der ersten Umgebung; und

Senden des Meldungsstroms an das ursprüngliche Ziel der abgefangenen Meldung durch Aufruf geeigneter API-Funktionen der ersten Umgebung, die dafür sorgen, daß die Meldung an das ursprüngliche Ziel abgegeben wird.

**Revendications**

**1.** Un système de traitement de données, ayant un premier environnement à base de messages et comprenant un système d'encapsulation pour faciliter le fonctionnement d'une application écrite pour un deuxième environnement à base de messages, l'application étant agencée pour créer des objets qui interagissent via des messages, le système d'encapsulation comprenant :

des moyens d'interception pour intercepter des messages dépendant de l'environnement, envoyés vers ou par un objet de l'application;

des moyens de conversion, pour recevoir chaque message intercepté, envoyé à l'objet et pour convertir ce message en un flux de message équivalent, du deuxième environnement à base de messages, et pour recevoir chaque message intercepté envoyé depuis l'objet et convertir ce message en un flux de message équivalent du premier environnement; et

des moyens de transmission pour envoyer le flux de message à la destination d'origine du message intercepté;

de manière que l'objet soit traité par le premier environnement à titre d'objet standard de cet environnement.

**2.** Un système selon la revendication 1, dans lequel le système d'encapsulation comprend en outre :
des moyens d'actionnement pour assurer que, après qu'un objet destinataire ait effectué une réception et réagi à un message ayant été converti par les moyens de conversion, soient effectuées d'éventuelles actions, qui n'avaient pas été effectuées directement par l'objet destinataire mais qui sont nécessaires pour que l'objet destinataire agisse de la façon attendue par l'objet qui a envoyé le message.

**3.** Un système selon la revendication 1 ou la revendication 2, dans lequel le système d'encapsulation comprend en outre :

des moyens de surveillance, agencés pour surveiller le premier environnement à base de messages, concernant d'éventuels événements, présentant un intérêt pour l'objet de l'application mais qui n'entraîneraient pas normalement l'envoi de message par le premier environnement à base de messages; et

des moyens d'envoi de message, réagissant aux moyens de surveillance pour envoyer des messages à l'objet pour notifier à l'objet l'occurrence de tels événements.

**4.** Un système selon l'une quelconque des revendications 1 à 3, dans lequel le système d'encapsulation comprend en outre :

des deuxièmes moyens de surveillance, agencés pour surveiller les objets de l'application, concernant d'éventuels événements, présentant un intérêt pour le premier environnement à base de messages, ou pour des objets du premier environnement à base de messages, mais qui n'entraîneraient pas normalement l'envoi de message par les objets de l'application; et

des deuxièmes moyens d'envoi de message, réagissant aux moyens de surveillance, pour envoyer des messages au premier environnement à base de messages, ou à ses objets, pour fournir une notification de l'occurrence de tels événements.

**5.** Un système selon l'une quelconque des revendications précédentes, dans lequel les moyens d'interception comprennent :
des moyens pour établir un sous-classement de chaque objet crée par l'application, de manière que des messages, envoyés à de tels objets, provoquent l'appel d'un procédé de sous-classement, plutôt qu'un procédé que l'objet d'origine autrement aurait appelé.

**6.** Un système selon la revendication 5, dans lequel des objets de l'application utilisent des fonctions API fournies par le deuxième environnement, pour envoyer des messages, et les moyens d'interception comprennent en outre :

des moyens de stockage agencés pour stocker un jeu de fonctions, fournies par le système d'encapsulation, qui a la même séquence d'appel que les fonctions API utilisées pour envoyer des messages dans le deuxième environnement; et

des moyens pour remplacer les appels API, envoyés par l'objet à des fonctions API du deuxième environnement, par des appels des fonctions correspondantes stockées dans les moyens de stockage.

**7.** Un système selon la revendication 6, dans lequel les fonctions correspondantes envoyées dans les moyens de stockage mettent en outre : (a) les moyens de conversion pour convertir des messages inclus dans l'appel API, à partir de l'objet se trouvant dans le flux de message équivalent du premier environnement; et (b) les moyens de transmission par appel de fonctions API appropriées du premier environnement, pour envoyer le message à la destination d'origine.

**8.** Un système selon l'une quelconque des revendications précédentes, dans lequel les environnements à base de messages sont des environnements à Interface Graphique Utilisateur (GUI) et les objets du programme d'application sont des fenêtres.

**9.** Un système selon la revendication 8, dans lequel le premier environnement à base de messages est fourni par Microsoft Windows, et le deuxième environnement à base de messages est fourni par le système d'exploitation OS/2 d'IBM.

**10.** Un système selon l'une quelconque des revendications précédentes, dans lequel des messages indépendants de l'environnement ne sont pas interceptés par les moyens d'interception.

**11.** Un procédé de fonctionnement d'un système d'encapsulation fourni par un système de traitement de données ayant un premier environnement à base de messages pour faciliter le fonctionnement d'un programme d'application écrit pour un deuxième environnement à base de messages, le programme d'application étant agencé pour créer des objets qui interagissent via des messages, le procédé comprenant les étapes consistant à :

intercepter des messages dépendant de l'environnement, envoyés vers ou depuis un objet du programme d'application;

recevoir chaque message intercepté, envoyé à l'objet, et convertir ce message en un flux de messages équivalent du deuxième environnement à base de messages;

recevoir chaque message intercepté envoyé depuis l'objet et convertir ce message en un flux de messages équivalent du premier environnement; et

envoyer le flux de messages à la destination d'origine du message intercepté;

de manière que l'objet soit traité par le premier environnement comme objet standard de cet environnement.

12. Un procédé selon la revendication 11, comprenant en outre l'étape de fourniture d'un procédé permettant d'assurer que, après qu'un objet destinataire ait effectué une réception et réagi à un message qui a été converti par le système d'encapsulation, soient effectuées d'éventuelles actions que l'objet destinataire n'effectuerait pas directement, mais qui sont nécessaires pour que l'objet destinataire agisse de la façon attendue par l'objet ayant envoyé le message.

13. Un procédé selon la revendication 11 ou la revendication 12, comprenant en outre les étapes consistant à :

surveiller le premier environnement à base de messages pour ce qui concerne d'éventuels événements, présentant un intérêt à l'objet de l'application mais qui n'entraîneraient pas normalement l'envoi de message par le premier environnement à base de messages; et

en réponse à l'étape de surveillance, envoyer des messages à l'objet, pour notifier à l'objet l'occurrence de tels événements.

14. Un procédé selon l'une quelconque des revendications 11 à 13, comprenant en outre les étapes consistant à :

surveiller les objets de l'application concernant d'éventuels événements, présentant un intérêt pour le premier environnement à base de messages, ou les objets du premier environnement à base de messages, mais qui n'entraîneraient pas normalement l'envoi de message par les objets de l'application; et

en réaction à l'étape de surveillance, envoyer des messages au premier environnement à base de messages, ou à ces objets, pour fournir une notification de l'occurrence de tels événements.

15. Un procédé selon l'une quelconque des revendications 11 à 14, dans lequel l'étape d'interception comprend l'étape consistant à :
effectuer un sous-classement de chaque objet créé par l'application, de manière que des messages, envoyés à de tels objets, provoquent l'appel d'un procédé de sous-classement, plutôt que d'un procédé que l'objet originel aurait autrement appelé.

16. Un procédé selon la revendication 15, dans lequel des objets de l'application utilisent des fonctions API fournies par le deuxième environnement, pour envoyer les messages, et l'étape d'interception comprenant en outre :

le stockage, dans des moyens de stockage, d'un jeu de fonctions fournies par le système d'encapsulation, qui ont la même séquence d'appel que les fonctions API utilisées pour envoyer des messages dans le deuxième environnement; et

remplacer les appels API envoyés par l'objet, pour des fonctions API du deuxième environnement, par des appels aux fonctions correspondantes, stockées dans les moyens de stockage.

17. Un procédé selon al revendication 16, dans lequel les fonctions correspondantes stockées dans les moyens de stockage effectuent les étapes consistant à :

convertir des messages, inclus dans l'appel API venant de l'objet, dans le flux de messages équivalent du premier environnement; et

envoyer le flux de messages à la destination d'origine du message intercepté, par appel de fonctions API appropriées du premier environnement, pour envoyer le message à la destination d'origine.

Window          Window 1          Window 2          Window 3

Instance Data
```
Instance          Instance          Instance
data              data              data
window 1          window 2          window 3
```
160          170          180

150

Window
Procedure

METHODS

METHODS

140

## FIG. 1

```
SSSSSSSSSSSSSSSSSSSSSSSSSSSSSS
S                             S
S    SSSSSSSSSSSSSSSSSSSS      S
S    S00000000000000000S      S
S    S0                0S     S
S    S0    0000000000  0S     S
S    S0   0          0 0S     S  ‾210
S    S0   0   200‾0     0S     S‾
S    S0   0          0  0S     S
S    S0   0          0  0S     S
S    S0    0000000000   0S     S
S    S0                0S      S
S    S000000000000000000S      S
S    SSSSSSSSSSSSSSSSSSSS       S
S            ‾220              S
SSSSSSSSSSSSSSSSSSSSSSSSSSSSSSSS
```

FIG. 2A

FIG. 2B

FIG. 3

FIG. 4

$C_1$ 500

| |
|---|
| $m_1$ $m_2$ |
| $C_{1D}$ |

520

$C_2$ 510

| |
|---|
| $m_2$ $m_3$ |
| $C_{2D}$ |

530

$O$ 540

| |
|---|
| $m_1$ $m_2$ |
| $O_d$ |

$O'$ 550

| |
|---|
| $m_1$ $m_2'$ $m_3$ |
| $O_d$ |

## FIG. 5

FIG. 6A

FIG. 6B

FIG. 6C

WinRegisterClass ("OS2-WINDOW-CLASS1", OS2wndProc)

Class Instance Data

| NAME | VALUE | |
|---|---|---|
| CLASS NAME | OS2-WINDOW-CLASS 1 | ~710 |
| Window Procedure | subclass Proc ● | ~720 |
| OS2 Window Procedure | OS2 wnd Proc ● | |
| ⋮ | ⋮ | ~730 |

WinCreateWindow ("OS2-WINDOW-CLASS1")

740

720

Inbound messages

750

converted message stream

Window Instance Data

| NAME | VALUE |
|---|---|
| OS2 Window Procedure | OS2wndProc ● |

730

FIG. 7